# EUROPEAN PATENT APPLICATION

(11) **EP 1 026 459 A1**
(43) Date of publication of application: **09.08.2000**
(21) Application number: 99126069.6
(22) Date of filing: 28.12.1999
(51) Int. Cl.: F25B 1/00, F25B 41/06

(54) **Vapor compression type refrigeration system**

(30) Priority: 11.01.1999 JP 382399
(71) Applicant: SANDEN CORPORATION, Isesaki-shi Gunma 372 (JP)
(72) Inventor: Komatsu, Shunji, c/o Sanden Corporation, Isesaki-shi, Gunma 372 (JP); Yamamoto, Kiyokazu, c/o Sanden Corporation, Isesaki-shi, Gunma 372 (JP)
(74) Representative: Prüfer, Lutz H., Dipl.-Phys.

(57) **Abstract**

A vapor compression type refrigeration system 301 comprises a first refrigerant temperature detector 302 attached on a pipe P₇ to detect temperature of refrigerant at the side of an outlet of an evaporator 108. A second refrigerant temperature detector 303 is attached on a pipe P₈ to detect temperature of the refrigerant at the side of an inlet of a compressor 103. A change-over controller 304 connected to the first and the second refrigerant temperature detectors 302 and 303 and a superheat control valve 107 and changes/selects either one of refrigerant temperature detection value signals from the first and the second refrigerant temperature detectors 302 and 303 under predetermined conditions. A superheat control valve 107 adjusts the flow rate of the refrigerant flowing into the evaporator 108 so that refrigerant superheat on the side of the inlet of the compressor 103 reaches a predetermined value.

## Description

### BACKGROUND OF THE INVENTION:

This invention relates to a vapor compression type refrigeration system which is preferably used as an air conditioner for cars, businesses, or households and, in particular, relates to a vapor compression type refrigeration system which uses carbon dioxide (CO₂) as a refrigerant.

In these days the prevention of earth warming by Freon gas has been demanded in a worldwide scale. While a conventional vapor compression type refrigeration system generally uses Freon as a refrigerant, another conventional vapor compression type refrigeration system using, for example, carbon dioxide (CO₂) is proposed as one of refrigerant de-Freon measures. The refrigeration system using carbon dioxide is called a CO₂ cycle system.

However, in the CO₂ cycle system, since CO₂ with a low critical point is used as a sealed refrigerant, there is an disadvantage that the coefficient of performance (hereinafter abbreviated as COP) has a smaller value as compared with a refrigeration system in which Freon with a higher critical point than that of CO₂ is used as the sealed refrigerant. Therefore, it is required in the CO₂ cycle system to increase the value of COP for improving the COP.

In a general method of improving the COP of the CO₂ cycle system, for example, an internal heat exchanger is used to perform heat exchange of the refrigerant. The internal heat exchanger cools the refrigerant flowing from a radiator or gas cooler to an evaporator by the use of the refrigerant flowing from the evaporator to a gas-liquid separator. As a result, the COP is improved in the CO₂ cycle system.

However, the refrigerant flowing from the evaporator to the gas-liquid separator is heated in compensation for cooling of the refrigerant flowing from the radiator or gas cooler to the evaporator. As the refrigerant is sent to a compressor from the gas-liquid separator, it heats lubricating oil in the compressor. The lubricating oil tends to deteriorate, as its temperature becomes high. This brings deterioration of reliability of the CO₂ cycle system.

### SUMMARY OF THE INVENTION:

It is therefore an object of this invention to provide a vapor compression type refrigeration system which suppresses rise in refrigerant discharge temperature of a compressor, prevents lubricating oil from being deteriorated, and increases COP value to make improvements.

Other object of this invention will become clear as the description proceeds.

On describing the gist of this invention, it is possible to understand that a vapor compression type refrigeration system has a compressor which compresses a vapor phase refrigerant to produce a compressed refrigerant. A radiator is coupled to the compressor and radiates heat of the compressed refrigerant to produce a condensed refrigerant. A superheat control valve is coupled to the radiator and adjusts flow rate of the condensed refrigerant in response to a control signal. An evaporator is coupled to the superheat control valve and the compressor and evaporates the condensed refrigerant from the superheat control valve to produce a evaporated refrigerant which is supplied to the compressor as the vapor phase refrigerant. An internal heat exchanger is located between the radiator and the superheat control valve and between the evaporator and the compressor and performs heat exchange between the condensed refrigerant and the evaporated refrigerant. A first refrigerant temperature detector detects temperature of the evaporated refrigerant between the evaporator and the internal heat exchanger to produce a first detection value signal.

According to the gist of this invention, the vapor compression type refrigeration system is characterized by a second refrigerant temperature detector which detects temperature of the evaporated refrigerant between the internal heat exchanger and the compressor to produce a second detection value signal, and a change-over selector which is connected to the first refrigerant temperature detector, the second refrigerant temperature detector, and the superheat control valve and which selects either of the first detection value signal and the second detection value signal to supply the selected detection value signal for the superheat control valve as the control signal.

According to another gist of this invention, a vapor compression type refrigeration system uses carbon dioxide (CO₂) as a refrigerant. The vapor compression type refrigeration system includes a compressor which compresses a gas phase refrigerant. A radiator exchanges heat between the refrigerant compressed by the compressor and outside fluid and cooling the refrigerant. An evaporator evaporates the refrigerant from the radiator and supplies the refrigerant to the compressor. An internal heat exchanger allows the refrigerant of an outlet of the radiator and the refrigerant of an outlet of the evaporator to perform heat exchange. A first refrigerant temperature detector detects the temperature of the refrigerant supplied to the internal heat exchanger from the evaporator. A superheat control valve is attached to a channel on the side of an outlet of the internal heat exchanger and adjusts the flow rate of the refrigerant flowing into the evaporator based on a final refrigerant temperature detection value so that the superheat of the refrigerant on the side of an inlet of the compressor reaches a predetermined value. A second refrigerant temperature detector detects the temperature of the refrigerant flowing from the internal heat exchanger via the evaporator outlet. A change-over selector changes/selects either of a first refrigerant temperature detection value from the first refrigerant temperature detector and a second refrigerant temperature detection value from the second refrigerant temperature detector under predetermined conditions to supply it to superheat control valve as the final refrigerant temperature detection value.

### BRIEF DESCRIPTION OF THE DRAWINGS:

Fig. 1 is a circuit diagram of a conventional CO₂ cycle system using an internal heat exchanger;
Fig. 2 is a characteristic graph showing the relation of an outside air temperature, COP value, and compressor discharge temperature in the conventional CO₂ cycle system of Fig. 1;
Fig. 3 is a circuit diagram of a vapor compression type refrigeration system according to a first embodiment of this invention;
Fig. 4 is a characteristic graph showing the relation of an outside air temperature, COP value, and compressor discharge temperature in the vapor compression type refrigeration cycle of Fig. 3;
Fig. 5 is a circuit diagram of a vapor compression type refrigeration system according to a second embodiment of this invention;
Fig. 6 is a circuit diagram of a vapor compression type refrigeration system according to a third embodiment of this invention; and
Fig. 7 is a circuit diagram of a vapor compression type refrigeration system according to another embodiment of this invention.

### DESCRIPTION OF THE PREFERRED EMBODIMENTS:

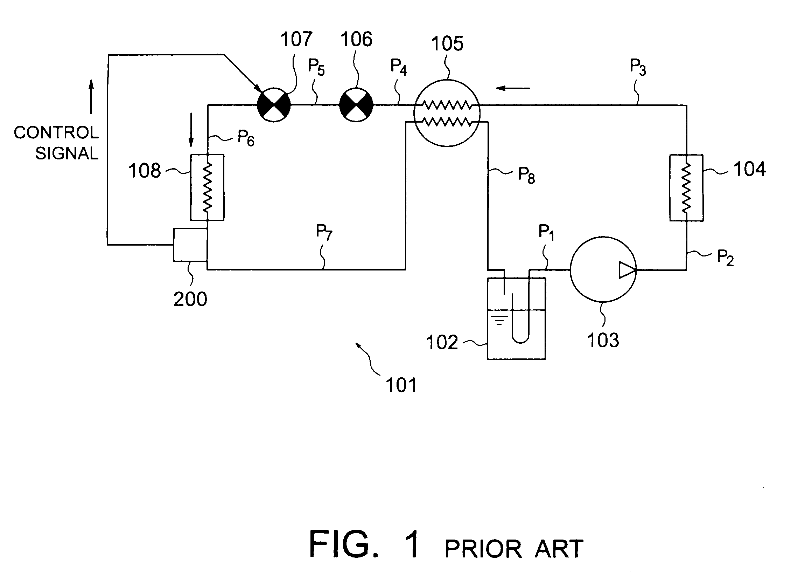

Referring to Fig. 1, description will be at first directed to a conventional vapor compression type refrigeration system for a better understanding of this invention.

The conventional vapor compression type refrigeration system 101 (hereinafter referred to just as the conventional system 101) shown in Fig. 1 is, for example, an air conditioning system mounted on vehicles such as a car, and uses carbon dioxide (CO₂) as a refrigerant.

In Fig. 1, the conventional system 101 comprises a gas-liquid separator 102 which stores the refrigerant separated in a liquid phase state and a gas phase state. A compressor 103 is coupled to the gas-liquid separator 102 with a pipe P₁ and compresses the refrigerant, which is supplied from the gas-liquid separator 102 and which has a gas phase state. A radiator (or gas cooler) 104 is coupled to the compressor 103 with a pipe P₂ and exchanges heat between the refrigerant compressed by the compressor 103 and outside air and cools the refrigerant. An internal heat exchanger 105 is couple to the radiator 104 with a pipe P₃. A high pressure control valve 106 is couple to the internal heat exchanger 105 with a pipe P₄, which is connected to the pipe P₃ inside the internal heat exchanger 105, and controls the pressure of the refrigerant supplied from the radiator 104 through the popes P₃ and P₄. A superheat control valve 107 is connected between a pipe P₅, which is connected to the high pressure control valve 106, and a pipe P₆ to adjust the flow rate of the refrigerant flowing from the pipe P₅ to the pipe P₆ in response to a control signal so that the superheat of the refrigerant CO₂ on the side of the inlet of the compressor 103 reaches a predetermined value. An evaporator 108 is connected to the pipe P₆ and evaporates the refrigerant supplied from the radiator 104 though the pipe P₃, the internal heat exchanger 105, the pipe P₄, the high pressure valve 106, the pipe P₅, and the superheat control valve 107. The internal heat exchanger 105 is further connected to the evaporator 108 and the gas-liquid separator 102 with pipes P₇ and P₈, respectively. The pipes P₇ and P₈ are connected to each other inside the internal heat exchanger 105. The internal heat exchanger 105 allows the refrigerant from the pipe P₃ to the Pipe P₄ and the refrigerant from the pipe P₇ to the pipe P₈ to perform heat exchange. A temperature sensitive cylinder (or filled-system temperature sensor) 200 is attached to the pipe P₇ to detect temperature of the refrigerant flowing through the pipe P₇. The temperature sensitive cylinder 200 supplies liquid pressure according to the detected temperature to the superheat control valve 107 as the control signal.

An operation of the conventional system 101 will be briefly described soon.

The gas-liquid separator 102 supplies the refrigerant CO₂ of the gas phase state to the compressor 103, and separates the refrigerant CO₂ flowing from the evaporator 108 via the internal heat exchanger 105 into a liquid-phase CO₂ and a gas-phase CO₂ to temporarily store them therein.

The compressor 103 compresses the refrigerant CO₂ of the gas phase state supplied from the gas-liquid separator 102 to produce a compressed refrigerant with its critical pressure or more. The compressed refrigerant flows into the gas cooler 104 via the pipe P₂.

The gas cooler 104 changes heat between the compressed refrigerant and outside fluids such as outside air, and cools the compressed refrigerant CO₂ to supply cooled gaseous refrigerant to the internal heat exchanger 105.

The internal heat exchanger 105 exchanges heat between the cooled gaseous refrigerant and an evaporated refrigerant flowing out of the evaporator 108.

The high pressure control valve 106 controls the pressure on the side of the outlet (or the pipe P₄) of the internal heat exchanger 105 in accordance with the temperature of the refrigerant CO₂ on the side of the outlet of the internal heat exchanger 105 and decompresses the refrigerant flowing from the pipe P₄ to the pipe P₅.

The superheat control valve 107 adjusts the flow rate of the refrigerant CO₂ flowing to the evaporator 108 so that the superheat on the side of the inlet of the compressor 103 reaches a predetermined value. The superheat control valve 107 is a mechanical type and adjusts the flow rate in response to the liquid pressure supplied from the temperature sensitive cylinder 200.

The evaporator 108 evaporates the refrigerant supplied from the superheat control valve 107 and supplies the evaporated refrigerant to the internal heat exchanger 105.

Thus, the refrigerant is circulated through the gas-liquid separator 102, and compressor 103, the radiator 104, the internal heat exchanger 105, high pressure control valve 106, superheat control valve 107, evaporator 108, and the internal heat exchanger 105 in that order.

Here, the internal heat exchanger 105 exchanges heat between the refrigerant that flows out of the gas cooler 104 and the refrigerant that flows out of the evaporator 108. The refrigerant that flows out of the gas cooler 104 has relatively high-temperature (e.g., 40-50°C) while the refrigerant that flow out of the evaporator 108 has relatively low-temperature (e.g., 5-10°C). Accordingly, the internal heat exchanger 105 cools the temperature of the refrigerant flowing into the evaporator 108 and the value of COP (Coefficient of Performance) is increased. Moreover, the internal heat exchanger 105 rises the temperature of the refrigerant from the outlet of the evaporator 108 and returns the refrigerant to the gas-liquid separator 102.

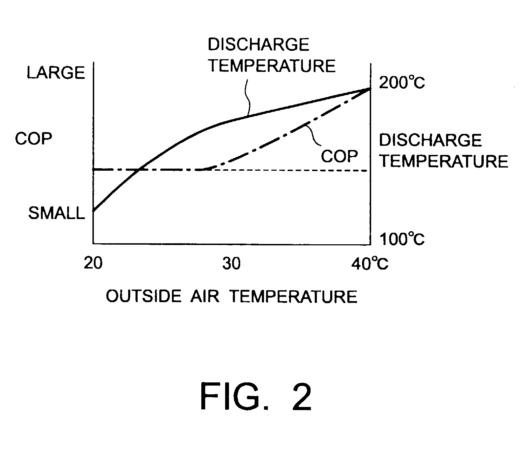

Fig. 2 shows relations of the outside air temperature with the COP value of the conventional system 101 and the discharge refrigerant temperature of the compressor 103 (or the temperature of the compressed refrigerant).

As seen from Fig. 2, in the conventional system 101, while the outside air temperature is low, there is a small effect of COP improvement when the internal heat exchanger 105 is used. When the outside air temperature exceeds a certain constant level, the COP value is increased and improved in proportion to the outside air temperature.

By the way, the internal heat exchanger 105 heats the CO₂ vapor of the refrigerant returning to the gas-liquid separator 102 as mentioned above. This means that the temperature of the refrigerant sucked by the compressor 103 becomes high and the discharge refrigerant temperature also shifts toward higher temperatures. Accordingly, the discharge refrigerant temperature is higher than that in another vapor compression type refrigeration system without an internal heat exchanger. As seen from Fig. 2, since the discharge refrigerant temperature rises in proportion to the rise in the outside air temperature, there are some cases where it exceeds 150°C which is a measure of deterioration of lubricating oil in the compressor 103. The lubricating oil exceedingly changes in quality when the discharge refrigerant temperature of the compressor 103 is higher than about 150°C. Therefore, there is a problem that the deterioration of the lubricating oil proceeds fast in the conventional system.

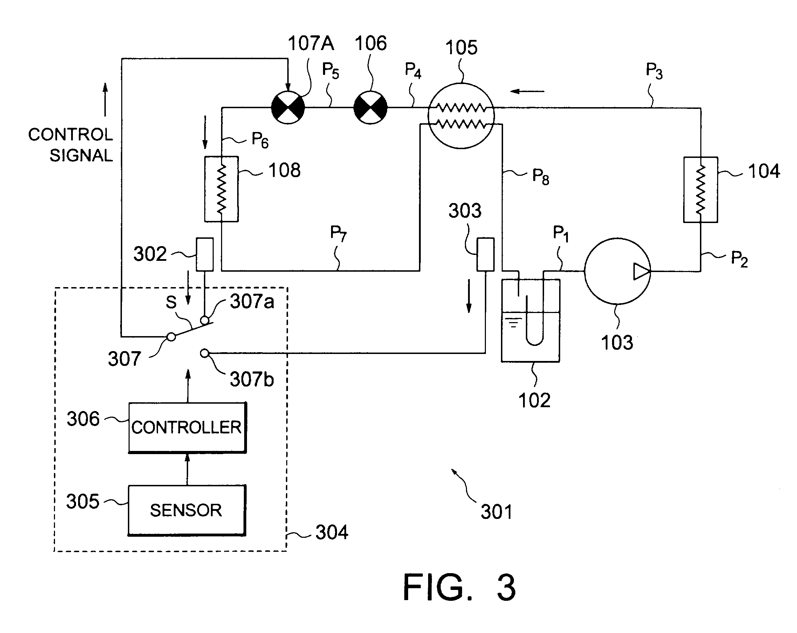

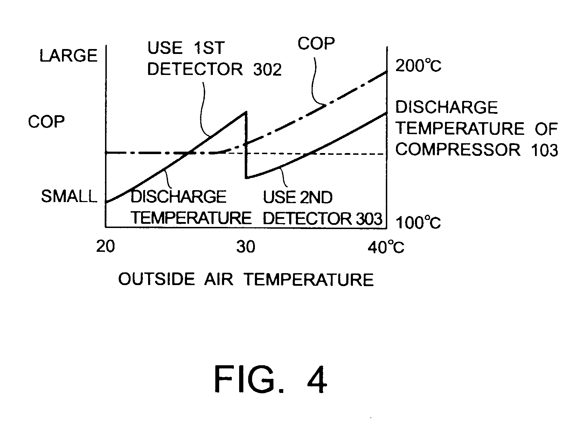

Referring to Figs. 3 and 4, the description will proceed to a vapor compression type refrigeration system according to a first embodiment of this invention. Similar parts are designated by the same reference numerals.

In Fig. 3, the vapor compression type refrigeration system 301 (hereinafter referred to simply as the refrigeration system 301) comprises a first refrigerant temperature detector 302 which is attached on the pipe P₇ and which has, for example, a thermistor. The first refrigerant temperature detector 302 detects the temperature of the refrigerant flowing out of the evaporator 108 in the position of the outlet of the evaporator 108 and produces a first refrigerant temperature detection value signal based on the detected temperature. A second refrigerant temperature detector 303 is attached on the pipe P₈ and has, for example, a thermistor. The second refrigerant temperature detector 303 detects the temperature of the refrigerant flowing out of the evaporator 108 in the position of the outlet of the internal heat exchanger 105 to produce a second refrigerant temperature detection value signal base on the detected temperature.

A change-over controller 304 is connected to the first and the second refrigerant temperature detectors 302 and 303 and a superheat control valve 107A and comprises a sensor 305, a controller 306, and a change-over switch 307.

The sensor 305 detects the outside air temperature and supplies detected value data to the controller 306. The controller 306 monitors the detected value data supplied from the sensor 305 and produces a change-over control signal when the outside air temperature exceeds a predetermined temperature. The change-over control signal is supplied to the change-over switch 307. The change-over switch 307 has two fixed contacts 307a and 307b, which are connected to the first and the second refrigerant temperature detectors 302 and 303, respectively, and a movable contact S, which is connected to the superheat control valve 107A. The change-over switch 307 changes the connection of movable contact S to either of the fixed contacts 307a and 307b based on the change-over control signal from the controller 306 and selectively transmits either of the first and the second refrigerant temperature detection value signals to the superheat control valve 107A as the control signal.

In this embodiment, the superheat control valve 107A uses a solenoid valve (not shown) and is different from the superheat control valve 107 of the conventional system 101 in structure. The superheat control valve 107A opens/closes the solenoid valve based on the control signal supplied from either the first refrigerant temperature detector 302 or the second refrigerant temperature detector 303 so that the superheat on the side of the inlet of the compressor 103 reaches the predetermined value in the range of 0 to 20K. For example, the superheat control valve 107A performs control to adjust the open degree of the solenoid valve so that the detection temperature detected by either the first refrigerant temperature detector 302 or the second refrigerant temperature detector 303 corresponds to the sum of the evaporation temperature of CO₂ and the above-described superheat. When the evaporation temperature of CO₂ in the evaporator 108 is 0°C, the superheat is set to a certain value, for example, 5K in the range of 0 to 20K as described above. Therefore, the open degree of the solenoid valve of the superheat control valve 107A is adjusted so that the detection temperature detected by either the first refrigerant temperature detector 302 or the second refrigerant temperature detector 303 reaches 5°C (= 0°C + 5K).

In the refrigeration system 301 constituted as described above, the refrigerant CO₂ is compressed to provide its critical pressure or more by the compressor 103, and discharged at 100°C or a higher temperature. By the heat exchange with the outside air by the gas cooler 104, the refrigerant CO₂ is cooled down, for example, to 40 to 50°C. Furthermore, the refrigerant is subjected to the control of the pressure and flow rate by the high pressure control valve 106 and the superheat control valve 107A, respectively, and is changed to a liquid rich state of, for example, substantially 0°C. Then the refrigerant flows into the evaporator 108 and is evaporated therein. As a result, the evaporator 108 cools the inside of the car by taking heat from the fluid around it.

Furthermore, in the refrigeration system 301, the internal heat exchanger 105 performs the heat exchange between a relatively low temperature CO₂ from the evaporator 108 and a relatively high temperature CO₂ from the gas cooler 104. By the heat exchange, the CO₂ refrigerant flowing out of the gas cooler 104 is cooled by radiating action and its temperature drops, while the CO₂ refrigerant flowing out of the evaporator 108 is warmed by endothermic action and its temperature rises. As described above, since the CO₂ refrigerant flowing out of the gas cooler 104 is cooled by the internal heat exchanger 105, the COP value can be increased as a result. Moreover, since the CO₂ refrigerant flowing out of the evaporator 108 is warmed by the internal heat exchanger 105, the refrigerant temperature in the pipe P₈ (detected by the second refrigerant temperature detector 303) constantly has a higher value than that of the refrigerant temperature in the pipe P₇ (detected by the first refrigerant temperature 302). For example, the value is higher by 20 to 30°C. Additionally, the CO₂ refrigerant flowing out of the evaporator 108 and further the internal heat exchanger 105 flows into the gas-liquid separator 102, and is separated to a gas phase and a liquid phase, and the liquid phase is temporarily stored therein.

The control operation of the refrigeration system 301 will be described hereinafter. When the refrigeration system 301 starts, as shown in Fig. 3, the movable contact S of the change-over switch 307 is connected to the fixed contact 307a on the side of the first refrigerant temperature detector 302. Therefore, at the start of the refrigeration system 301, the superheat on the side of the inlet of the compressor 103 is controlled to reach the predetermined value based on the refrigerant temperature value of the pipe P₇ detected by the first refrigerant temperature detector 302.

Subsequently, when a predetermined time elapses after the start of the refrigeration system 301, the superheat on the side of the inlet of the compressor 103 is controlled by the following operation.

First, when the sensor 305 detects that the outside air temperature is 30°C or less, the movable contact S of the change-over switch 307 is connected to the fixed contact 307a on the side of the first refrigerant temperature detector 302. As a result, the open degree of the solenoid valve of the superheat control valve 107A is adjusted based on the refrigerant temperature value in the pipe P₇ detected by the first refrigerate temperature detector 302, and the above-described superheat is controlled to reach the predetermined value.

On the other hand, when the sensor 305 detects that the outside air temperature exceeds 30°C, the movable contact S of the change-over switch 307 is connected to the terminal 307b on the side of the second refrigerant temperature detector 303. As a result, the open degree of the solenoid valve of the superheat control valve 107A is adjusted based on the refrigerant temperature value in the pipe P₈ detected by the second refrigerant temperature detector 303, and the superheat is controlled to reach the predetermined value.

Additionally, for the opening/closing of the solenoid valve by the superheat control valve 107A, when the superheat value is higher than the predetermined value, the open degree of the solenoid valve is increased. Conversely, when the superheat value is lower than the predetermined value, the open degree of the solenoid valve is decreased. Specifically, when the open degree of the solenoid valve is increased, in the refrigeration system 301, the amount of the refrigerant flowing through the evaporator 108 and the internal heat exchanger 105 increases, and the temperature detected by the refrigerant temperature detector 302 or 303 lowers. On the other hand, when the open degree of the solenoid valve is decreased, the amount of the refrigerant flowing through the evaporator 108 and the internal heat exchanger 105 decreases, and the temperature detected by the refrigerant temperature detector 302 or 303 rises.

The state of the refrigeration system 301 when the open degree of the solenoid valve of the superheat control valve 107A is adjusted based on the first refrigerant temperature detection value signal will be described. After the pressure of the refrigerant CO₂ is reduced by the superheat control valve 107A, the refrigerant flowing to the evaporator 108 absorbs heat for both evaporation and a rise of temperature thereof. Here, the superheat control valve 107A adjusts the open degree of the solenoid valve so that the refrigerant temperature of the pipe P₇ detected by the first refrigerant temperature detector 302, that is, the refrigerant temperature of the outlet of the evaporator 108 reaches the sum of the evaporation temperature in the evaporator 108 and the set superheat. For example, when the evaporation temperature of CO₂ in the evaporator 108 is 0°C, and the superheat is set, for example, to a certain value in the range of 0 to 20K, for example, 5K as described above, the superheat control valve 107A adjusts the open degree of the solenoid valve so that the detection temperature of the first refrigerant temperature detector 302 is 5°C (= 0°C + 5K). Additionally, at this time, the refrigerant temperature of the pipe P₈ detected by the second refrigerant temperature detector 303 is, for example, 30°C. This is because the temperature of the CO₂ refrigerant flowing out of the evaporator 108 is increased by the endothermic action in the gas cooler 104.

The state of the refrigeration system 301 will next be described in the case in which the outside air temperature exceeds 30°C, and the connection is changed over to the fixed contact 307b on the side of the second refrigerant temperature detector 303 from the fixed contact 307a on the side of the first refrigerant temperature detector 302 by the movable contact S of the change-over switch 307.

In this case, the detected refrigerant temperature value signal of the pipe P₈ detected by the second refrigerant temperature detector 303 is inputted to the superheat control valve 107A instead of the detected refrigerant temperature value signal of the pipe P₇ detected by the first refrigerant temperature detector 302. Subsequently, the superheat control valve 107A adjusts the open degree of the solenoid valve so that the refrigerant temperature of the pipe P₈ detected by the second refrigerant temperature detector 303 reaches the sum of the evaporation temperature in the evaporator 108 and the set superheat. For example, when the evaporation temperature of CO₂ in the evaporator 108 is 0°C, and the superheat is set to 5K as described above, the superheat control valve 107A adjusts the open degree of the solenoid valve so that the detection temperature of the second refrigerant temperature detector 303 is 5°C (= 0°C + 5 K).

Additionally, here, the refrigerant temperature in the pipe P₈ (detected by the second refrigerant temperature detector 303) constantly has a higher value than that of the refrigerant temperature in the pipe P₇ (detected by the first refrigerant temperature detector 302) as described above. Therefore, the refrigerant temperature on the side of the outlet of the internal heat exchanger 105, that is, the refrigerant temperature of the pipe P₈ shifts to a lower value as compared with the control based on the temperature detection value of the above-described detector 302. Furthermore, the open degree of the solenoid valve of the superheat control valve 107A shifts to a larger open degree as compared with the control based on the temperature detection value of the first refrigerant temperature detector 302, and the amount of the refrigerant CO₂ circulating in the refrigeration system shifts to an increase direction. Therefore, the superheat on the side of the inlet of the compressor 103 shifts to a lower value as compared with the control based on the first temperature detection value signal from the first refrigerant temperature detector 302. Additionally, when control is performed based on the temperature detection value signal from the above-described detector 303, the liquid phase hardly exists in the gas-liquid separator 102.

By performing this control, in the refrigeration system 301, as shown in Fig. 4, even when the outside air temperature rises over 30°C, the discharge refrigerant temperature of the compressor 103 can be suppressed to less than 150°C. This can prevent lubricating oil in the compressor 103 from fast proceeding of deterioration. Additionally, the COP value is increased and the COP can be improved.

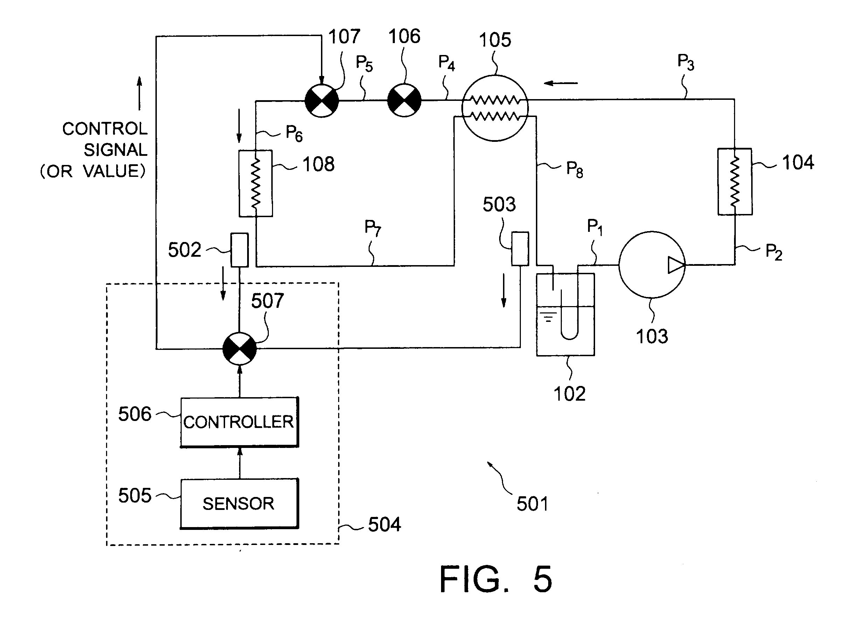

Referring to Fig. 5, a refrigeration system according to a second embodiment of this invention will next be described below.

The refrigeration system 501 shown in Fig. 5 has first and second temperature sensitive cylinders 502 and 503 in place of the first and the second refrigeration temperature detectors 302 and 303 of the first embodiment. Each of the temperature sensitive cylinders 502 and 503 is similar to the temperature sensitive cylinder 200 of the conventional system and has fluid sealed therein at a predetermined density. The refrigeration system 501 further has a change-over controller 504 having a sensor 505, a controller 506, and a change-over valve 507. The sensor 505 and the controller 506 are similar to the sensor 305 and the controller 306 of the first embodiment, respectively.

This change-over valve 507 changes/selects pressure of the fluid (hereinafter referred to the detected pressure) from either the first temperature sensitive cylinder 502 or the second temperature sensitive cylinder 503 based on the change-over control signal from the controller 504 and supplies the pressure to the superheat control valve 107 as the control signal (or the refrigeration temperature detection value). Furthermore, the superheat control valve 107 is of the mechanical type to adjust the open degree of the valve in accordance with the detection pressure supplied from either the first temperature sensitive cylinder 502 or the second temperature sensitive cylinder 503. Thus, the refrigeration system 501 is constituted of a pressure type for controlling the opening/closing of the superheat control valve 107.

Furthermore, by performing the setting and controlling similar to those of the refrigeration system 301 of Fig. 3, also in the refrigeration system 501, in the same manner as in the above-described refrigeration system 301, even when the outside air temperature rises and exceeds 30°C, the discharge refrigerant temperature of the compressor 103 can be suppressed to less than 150°C, and the effect similar to that of the first embodiment can be obtained.

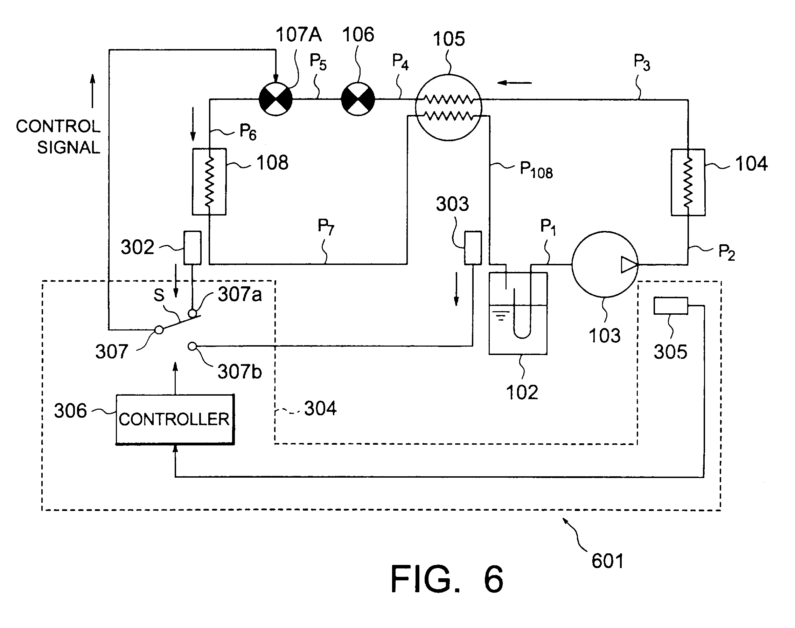

Referring to Fig. 6, description about a refrigeration system according to a third embodiment of this invention will be made soon.

The refrigeration system 601 shown in Fig. 6 is similar to the refrigeration system 301 except for the location of the sensor 305.

The sensor 305 is attached to the pipe P₂ to detect the temperature of the compressed refrigerant discharged from the compressor 103. The controller 306 changes over the detection signal to be supplied to the superheat control valve 107A based on the detection value of the sensor 305.

In the refrigeration system 601, in the initial state at the start of operation, as shown in Fig. 6, the detection signal from the first refrigeration temperature detector 302 is supplied to the superheat control valve 107A. Furthermore, the change-over controller 304 performs a change-over control so that when the discharge refrigerant temperature of the compressor 103 rises and exceeds the predetermined temperature, the detection signal from the second refrigerant temperature detector 303 is supplied to the superheat control valve 107A.

Specifically, in the change-over controller 304, the controller 306 monitors the detected value data on the discharge refrigerant temperature of the compressor 103 supplied from the sensor 305. When the discharge refrigerant temperature of the compressor 103 exceeds 150°C as a measure of deterioration of the lubricating oil, the change-over control signal is transmitted to the change-over switch 307, and control is performed to switch the connection of the movable contact S to the fixed contact 307b from the fixed contact 307a.

By performing this control, in the refrigeration system 601, when the discharge temperature of the compressor 103 exceeds the predetermined value, the refrigerant temperature on the side of the inlet of the compressor 103 shifts downward, and the rise in the discharge refrigerant temperature of the compressor 103 can be suppressed. As a result, the effect similar to that of the embodiment shown in Fig. 3 can be obtained.

As described above, according to the present invention, when the change-over selecting means changes/selects either one of the refrigerant temperature detection values from the first and second refrigerant temperature detecting means under the predetermined conditions, the superheat control valve adjusts the flow rate of the refrigerant to the evaporator from the radiator based on the selected refrigerant temperature detection value so that the superheat of the refrigerant reaches the predetermined value on the side of the inlet of the compressor. Therefore, there can be provided the vapor compression type refrigeration cycle in which the rise in the refrigerant discharge temperature of the compressor is suppressed, the lubricating oil is prevented from being deteriorated, and COP can be improved.

While this invention has thus for been described in conjunction with the preferred embodiments thereof, it will readily be possible for those skilled in the art to put this invention into practice in various other manners. For example, the refrigerant temperature detector 302 and 303 shown in Fig. 6 may be replaced with the temperature sensitive cylinders 502 and 503. In this case, the change-over switch 307 must be replaced with the change-over valve 507.

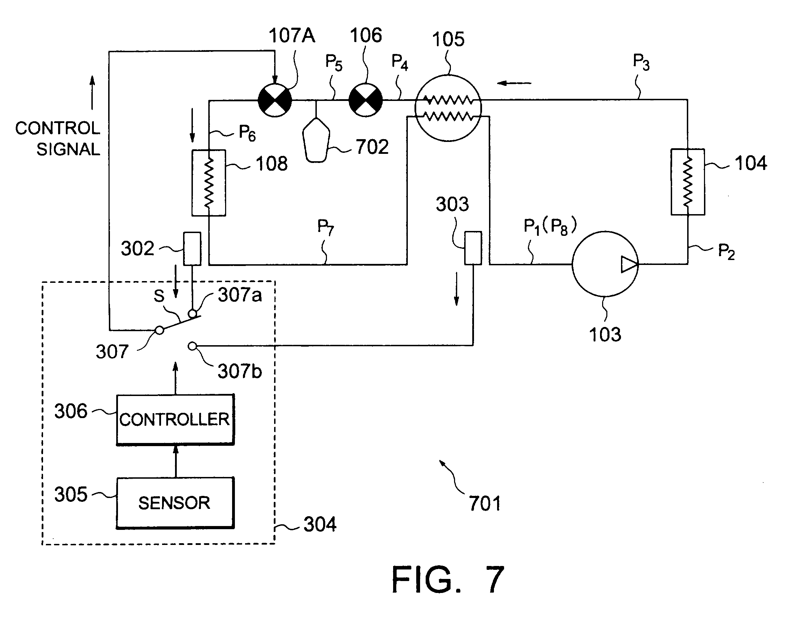

Furthermore, in the above-described embodiments, each system is constituted using the gas-liquid separator, but in the present invention, the system may be constituted without using the gas-liquid separator, for example, as shown in Fig. 7. In a refrigeration system 701 shown in Fig. 7, the refrigerant flowing out of the evaporator 108 is supplied to the compressor 103 without being passed via the gas-liquid separator. On the other hand, in the refrigeration system 701, a surge tank 702 is disposed between the high pressure control valve 106 and the superheat control valve 107, and excess refrigerant is stored in the surge tank 702. Here, the surge tank 702 may have a storage capacity of about 500 to 1000 ml.

Additionally, in the above-described embodiments, the sensor 305 detects the outside air temperature or the temperature of the compressed refrigerant discharged from the compressor 103, but the present invention is not limited to these. The above-described operation may be performed in accordance with other elements such as car air conditioning load, instead of the outside air temperature or the temperature of the compressed refrigerant.

## Claims

1. A vapor compression type refrigeration system (301, 501, 601, 701) having a compressor (103) for compressing a vapor phase refrigerant to produce a compressed refrigerant, a radiator (104) coupled to said compressor (103) for radiating heat of the compressed refrigerant to produce a condensed refrigerant, a superheat control valve (107 A) coupled to said radiator (104) for adjusting flow rate of the condensed refrigerant in response to a control signal, an evaporator (108) coupled to said superheat control valve (107 A) and said compressor (103) for evaporating the condensed refrigerant from said superheat control valve (107 A) to produce a evaporated refrigerant which is supplied to said compressor (103) as the vapor phase refrigerant, an internal heat exchanger (105) located between said radiator (104) and said superheat control valve (107 A) and between said evaporator (108) and said compressor (103) for performing heat exchange between the condensed refrigerant and the evaporated refrigerant, and first refrigerant temperature detecting means (302, 502) for detecting temperature of the evaporated refrigerant between said evaporator (108) and said internal heat exchanger (105) to produce a first detection value signal, characterized by: second refrigerant temperature detecting means (303, 503) for detecting temperature of the evaporated refrigerant between said internal heat exchanger (105) and said compressor (103) to produce a second detection value signal; and change-over selecting means (304, 504) connected to said first refrigerant temperature detecting means (302, 502), said second refrigerant temperature detecting means (303, 503), and said superheat control valve (107 A) for selecting either of the first detection value signal and the second detection value signal to supply the selected detection value signal for said superheat control valve (107 A) as the control signal.

2. The system as claimed in claim 1, wherein said change-over selecting means (304, 504) comprises: a change-over switch (307, 507) connected to said first refrigerant temperature detecting means (302, 502), said second refrigerant temperature detecting means (303, 503), and said superheat control valve (107 A) for changing over to supply either of the first detection value signal and the second detection value signal to said superheat control valve (107 A); a sensor (305, 505) for detecting an operation environment to produce a detected environment signal; and change-over switch control means (306, 506) connected to said change-over switch (307, 507) and said sensor (305, 505) for performing change-over control of said change-over switch (307, 507) based on the detected environment signal.

3. The system as claimed in claim 2, wherein said sensor (305, 505) is a temperature sensor which detects outside air temperature, the detected environment signal representative of the outside air temperature, or which detects temperature of the compressed refrigerant, the detected environment signal representative of the temperature of the compressed refrigerant.

4. The system as claimed in one of claims 1 to 3, wherein said first refrigerant temperature detecting means (302) and said second refrigerant temperature detecting means (303) have thermistors for producing electric signals as the first detection value signal and the second detection value signal, said superheat control valve (107 A) receiving either one of the electric signals as the control signal.

5. The system as claimed in one of claims 1 to 3, wherein said first refrigerant temperature detecting means (502) and said second refrigerant temperature detecting means (503) are temperature sensitive cylinders with fluid sealed therein for producing fluid pressures as the first detection value signal and the second detection value signal, said superheat control valve (107 A) receiving either of the fluid pressures as the control signal.

6. The system as claimed in one of claims 1 to 5, wherein the refrigerant is carbon dioxide (CO₂).

7. A vapor compression type refrigeration system (301, 501, 601, 701) in which carbon dioxide (CO₂) is used as a refrigerant, including: a compressor (103) for compressing a gas phase refrigerant, a radiator (104) for exchanging heat between the refrigerant compressed by said compressor (103) and outside fluid and cooling the refrigerant, an evaporator (108) for evaporating the refrigerant from said radiator (104) and supplying the refrigerant to said compressor (103), an internal heat exchanger (105) for allowing the refrigerant of an outlet of said radiator (104) and the refrigerant of an outlet of said evaporator (108) to perform heat exchange, first refrigerant temperature detecting means (302, 502) for detecting the temperature of the refrigerant supplied to said internal heat exchanger (105) from said evaporator (108), and a superheat control valve (107 A) attached to a channel on the side of an outlet of said internal heat exchanger (105) for adjusting the flow rate of the refrigerant flowing into said evaporator (108) based on a final refrigerant temperature detection value so that the superheat of the refrigerant on the side of an inlet of said compressor (103) reaches a predetermined value, characterized by: second refrigerant temperature detecting means (303, 503) for detecting the temperature of the refrigerant flowing from said internal heat exchanger (105) via said evaporator outlet; and change-over selecting means (304, 504) for changing/selecting either of a first refrigerant temperature detection value from said first refrigerant temperature detecting means (302, 502) and a second refrigerant temperature detection value from the second refrigerant temperature detecting means (303, 503) under predetermined conditions to supply the selected refrigerant temperature detection value to superheat control valve (107 A) as the final refrigerant temperature detection value.

8. The system as claimed in claim 7, wherein said first refrigerant temperature detecting means (302) and said second refrigerant temperature detecting means (303) comprise thermistors for outputting the first and the second refrigerant temperature detection values via electric signals, said change-over selecting means (304) comprising a change-over switch (307) for changing over to supply either electric signal from each thermistor to said superheat control valve (107 A), a temperature sensor (305) for detecting outside air temperature, and change-over switch control means (306) for performing change-over control of said change-over switch (307) based on the detection value of the temperature sensor (305), or third refrigerant temperature detecting means (305) for detecting discharge refrigerant temperature of said compressor (103), and change-over switch control means (306) for performing change-over control of said change-over switch (307) based on the detection value of the third refrigerant temperature detecting means (305).

9. The system as claimed in claim 7, wherein said first refrigerant temperature detecting means (502) and said second refrigerant temperature detecting means (503) comprise temperature sensitive cylinders with fluid sealed therein for outputting the first and the second refrigerant temperature detection values by fluid pressures, said change-over selecting means (504) comprising a change-over valve (507) for changing over to supply either fluid pressure from each temperature sensitive cylinder to said superheat control valve (107 A), a temperature sensor (505) for detecting outside air temperature, and change-over valve control means (506) for changing over said change-over valve (507) based on the detection value of the temperature sensor (505), or third refrigerant temperature detecting means (503) for detecting discharge refrigerant temperature of said compressor (103), and change-over valve control means (506) for changing over said change-over valve (507) based on the detection value of the third refrigerant temperature detecting means (505).
